# EUROPEAN PATENT APPLICATION

(11) **EP 4 071 986 A1**
(43) Date of publication of application: **12.10.2022**
(21) Application number: 21167210.0
(22) Date of filing: 07.04.2021
(51) Int. Cl.: H02K 13/00, H02K 5/14, H02K 17/22

(54) **A SLIPRING UNIT FOR A WOUND ROTOR MOTOR**

(71) Applicant: ABB Schweiz AG, 5400 Baden (CH)
(72) Inventor: Moioli, Giuseppe, 20037 Paderno Dugnano (MI) (IT); Serra, Fabrizio, 14100 Asti (AT) (IT)
(74) Representative: De Bortoli, Eros

(57) **Abstract**

A slipring unit for a wound rotor unit, wherein said slipring unit comprises:
- a ring bushing coupled to a rotatable shaft of said wound rotor motor, so as to rotate together with said rotatable shaft, and including one or more electrically conductive rings, each electrically connected to a corresponding rotor winding of said wound rotor motor;
- one or more brush assemblies, each including one or more electrically conductive brushes, the conductive brushes of each bush assembly being movable between a coupled position and an uncoupled position with a corresponding said conductive ring;
- a short-circuiting bushing coupled to said rotatable shaft, so as to rotate together with said rotatable shaft, said short-circuiting bushing being slidingly movable relative to said rotatable shaft, along a main longitudinal axis of said rotatable shaft, between a non-short-circuiting position, at which said short-circuiting bushing is separated from said ring bushing, and a short-circuiting position, at which said short-circuiting bushing is coupled with said ring bushing, thereby causing the short-circuiting of said conductive rings and said rotor windings;
- a lifting device including actuating means for moving the conductive brushes of each brush assembly and said short-circuiting bushing;
- retaining means adapted to interact with said rotatable shaft and with said short-circuiting bushing to prevent undesired movements of said short-circuiting bushing, along a main longitudinal axis of said rotatable shaft, when said short-circuiting bushing is in said short-circuiting position.

## Description

### Field of the invention

The present invention relates to a slipring unit for a wound rotor motor (also referred to as slipring motor).

### Background of the invention

As it is known, a wound rotor motor is a particular asynchronous unit having a rotatable shaft and a rotor assembly including a wound rotor core.

In many industrial applications, a wound rotor motor is equipped with a slipring unit.

A slipring unit normally comprises a ring bushing coupled to said wound rotor core and including suitable electrically conductive rings (one for electric phase), each of which is electrically connected to a corresponding rotor winding.

Such conductive rings are electrically connectable with an external rheostat through suitable conductive brushes, which are electrically insulated from the stator. In this way, the equivalent resistance of the rotor assembly can be adjusted, which allows tuning the performances of the unit (e.g. obtaining a higher torque or reducing possible in-rush currents at the stator assembly), in particular during a start-up phase of the unit.

Traditionally, a slipring unit comprises a short-circuiting bushing coupled to the motor shaft so as to rotate together with this latter.

Such a short-circuiting bushing is axially movable along the motor shaft to cause the short-circuiting of the conductive rings and the rotor windings.

Normally, the ring bushing is moved to a short-circuiting position, when the unit has reached a desired operating speed/torque and it can operate as a traditional electric unit having a squirrel-cage rotor assembly.

Some slipring units of the state of the art are equipped with a lifting device configured to move the above-mentioned short-circuiting bushing and conductive brushes in a synchronized manner in such a way that, when the short-circuit bushing is moved to the above-mentioned short-circuiting position, the above-mentioned conductive brushes are lifted from the corresponding conductive rings. In this way, unnecessary wear and dirt accumulation caused by the brush carbon dust are reduced.

Unfortunately, the slipring units of this type, which are currently available in the state of the art, have some aspects to be improved.

The experience has shown that, in operation, the electric contacts of short-circuiting bushing, once coupled to the electric contacts of the ring bushing to short-circuit the above-mentioned conductive rings and rotor windings, may undesirably move away from the short-circuiting position due to vibrations of the rotatable shaft or wear phenomena on said electric contacts. It has been seen that such an electric contact loosening, which is more frequent when the rotatable shaft is subject to huge torque stresses, may lead to relevant and unpredictable malfunctions of the wound rotor motor, which obviously may jeopardize its overall operating reliability.

The above-described technical issue is particularly critical in slipring units arranged according to a vertical configuration, in which the force of gravity naturally favours the movement of the short-circuiting bushing away from the above-mentioned short-circuiting position.

### Brief summary of the invention

The main aim of the present invention is to provide a slipring unit for a wound rotor motor, in particular a slipring unit of the type equipped with a lifting device, which allows overcoming or mitigating the above-mentioned criticalities of the known art.

Within this aim, a purpose of the present invention is to provide a slipring unit ensuring high levels of reliability in operation.

A further purpose of the present invention is to provide a slipring unit having an overall structure that is relatively simple and compact.

A further purpose of the present invention is to provide a slipring unit, which is relatively simple and cheap to be manufactured at industrial levels.

The above aim and purposes, as well as other purposes that will emerge clearly from the following description and attached drawings, are provided, according to the invention, by a slipring unit for a wound rotor motor, according to the following claim 1 and the related dependent claims.

The above-mentioned wound rotor motor comprises a stator assembly, a rotatable shaft and a rotor assembly coupled to said rotatable shaft so as to rotate together with said rotatable shaft. The rotor assembly comprises a wound rotor core having one or more rotor windings.

The slipring unit, according to the invention, comprises a ring bushing coupled to said rotatable shaft, so as to rotate together with said rotatable shaft, and including one or more electrically conductive rings, each electrically connected to a corresponding rotor winding.

The slipring unit, according to the invention, comprises one or more brush assemblies, each including one or more electrically conductive brushes. The conductive brushes of each bush assembly are movable between a coupled position, at which said conductive brushes are in contact with a corresponding conductive ring of said ring bushing, and an uncoupled position, at which said conductive brushes are separated from the corresponding conductive ring of said ring bushing.

The slipring unit, according to the invention, comprises a short-circuiting bushing coupled to said rotatable shaft so as to rotate together with said rotatable shaft.

Said short-circuiting bushing is slidingly movable relative to said rotatable shaft, along a main longitudinal axis of said rotatable shaft, between a non-short-circuiting position, at which said short-circuiting bushing is separated from said ring bushing, and a short-circuiting position, at which said short-circuiting bushing is coupled with said ring bushing and it causes the short-circuiting of said conductive rings and said rotor windings.

The slipring unit, according to the invention, comprises lifting device including actuating means for moving the conductive brushes of each brush assembly and said short-circuiting bushing.

Preferably, said actuating means are adapted to move the conductive brushes of each brush assembly and said short-circuiting bushing in a coordinated or synchronized manner, so that:
- when the conductive brushes of each brush assembly are in said coupled position, said short-circuiting bushing is in said non-short-circuiting position;
- when the conductive brushes of each brush assembly are in said uncoupled position, said short-circuiting bushing is in said short-circuiting position.

According to the invention, the slipring unit comprises retaining means adapted to interact with said rotatable shaft and with said short-circuiting bushing to prevent undesired movements of said short-circuiting bushing, along a main longitudinal axis of said rotatable shaft, when said short-circuiting bushing is in said short-circuiting position.

According to an aspect of the invention, said retaining means comprises one or more retaining elements fixed to said short-circuiting bushing so as to move together with said short-circuiting bushing. Said retaining elements are adapted to engage corresponding portions of said rotatable shaft, when said short-circuiting bushing is in said short-circuiting position.

Preferably, said one or more retaining elements are arranged along corresponding radial directions with respect to said rotatable shaft.

Preferably, said retaining means comprise a plurality of retaining elements arranged circumferentially around said rotatable shaft and angularly spaced one from another. According to an aspect of the invention, each retaining element is formed by a spring-loaded stopper adapted to fit in a corresponding seat of said rotatable shaft, when said short-circuiting bushing is in said short-circuiting position.

Preferably, each spring-loaded stopper comprises:
- an outer body including a pass-through cavity extending along a radial direction with respect to said rotatable shaft and having a first end in proximal position with respect to said rotatable shaft and a second end in distal position with respect to said rotatable shaft;
- a head member partially accommodated in said pass-through cavity and protruding from the first end of said pass-through cavity in such a way to be in contact with the outer surface of said rotatable shaft. Said head member is movable according to a radial direction with respect to said rotatable shaft;
- a plug member removably fixed to outer body and partially accommodated in said pass-through cavity. Said plug member protrudes from the second end of said pass-through cavity;
- an elastic member accommodated in said pass-through cavity and coupled to said head member and said plug member.

According to an aspect of the invention, the slipring unit comprises support means adapted to support said one or more retaining elements and fix said retaining elements to said short-circuiting bushing.

Preferably, said support means comprise a support ring fixed to said short-circuiting bushing and to the outer body of each spring-loaded stopper.

### Brief description of the drawings

Further characteristics and advantages of the invention will become apparent from the detailed description of exemplary embodiments of the slipring unit, which is illustrated only by way of non-limitative examples in the accompanying drawings, wherein:
- figure 1 schematically shows a general view of the slipring unit, according to the invention;
- figure 2 schematically shows the slipring unit, according to the invention, in a certain operating condition;

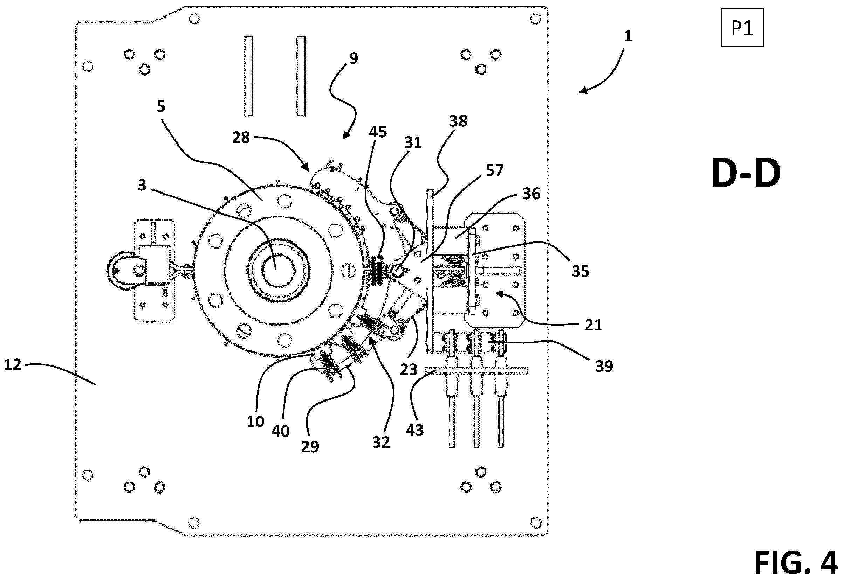

- figures 3-6 schematically show in more details some parts of the slipring unit, according to the invention, in the operating position of figure 2;
- figure 7 schematically shows the slipring unit, according to the invention, in another operating condition;

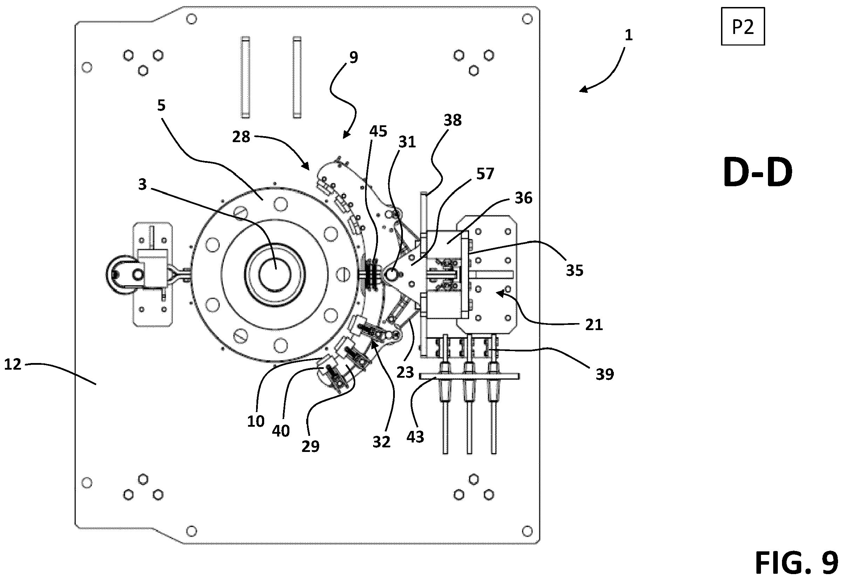

- figures 8-11 schematically show in more details some parts of the slipring unit, according to the invention, in the operating position of figure 7;

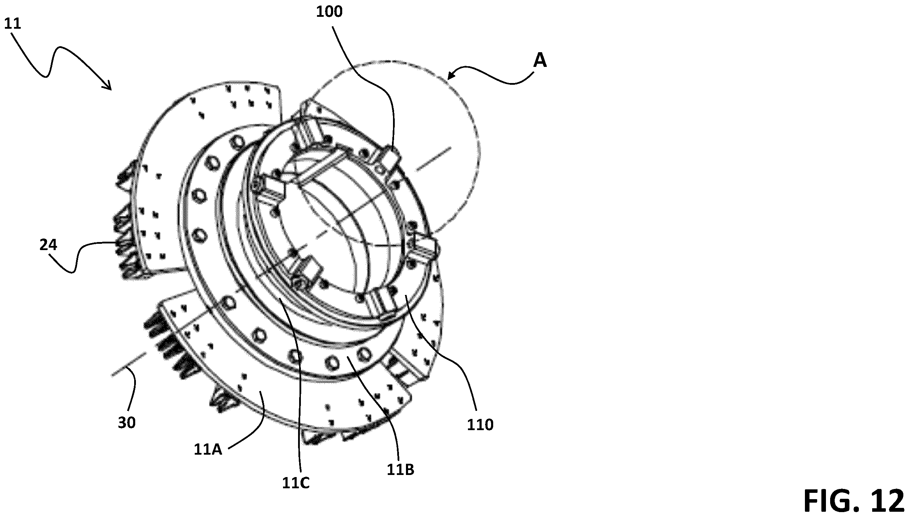

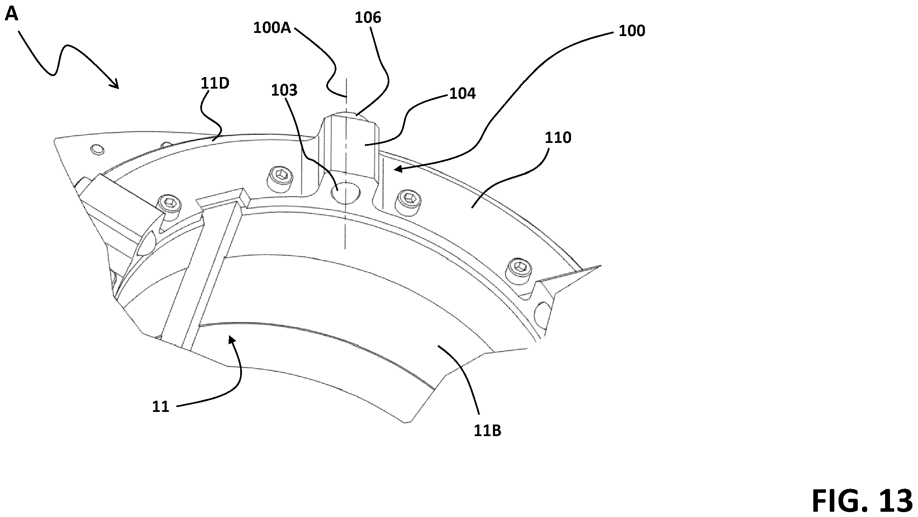

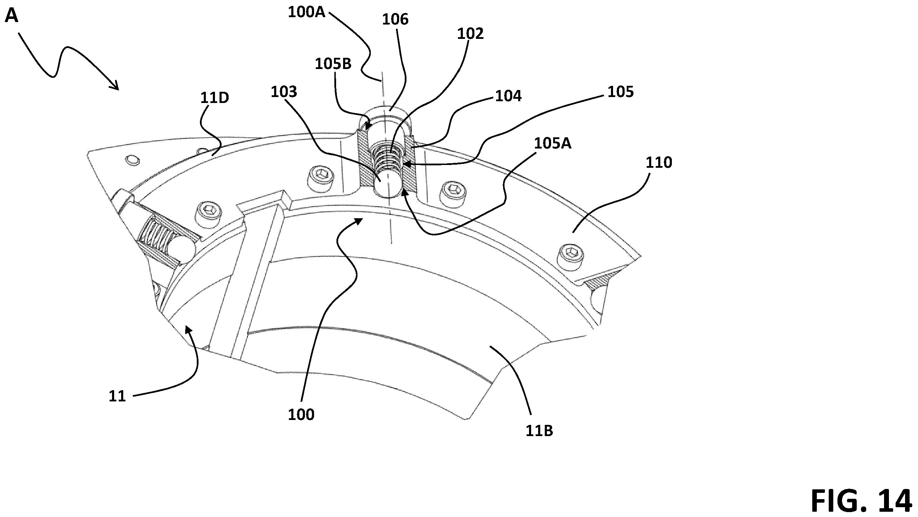

- figures 12-14 schematically show in more details some additional parts of the slipring unit, according to the invention.

### Detailed description of the invention

With reference to the cited figures, the present invention relates to a slipring unit 1 for a wound rotor motor (also referred to as slipring motor).

The wound rotor motor comprises a stator assembly (not shown), a rotatable shaft 3 (having a main longitudinal axis 30) and a rotor assembly (not shown) coupled to the shaft 3 so as to rotate together with this latter.

The rotor assembly comprises a wound rotor core including one or more rotor windings, namely a rotor winding for each electric phase.

The stator assembly, the shaft 3 and the rotor assembly of the wound rotor motor may be manufactured at industrial level according to solutions of known type, which will be here not described in further details for the sake of clarity.

When installed on board the above-mentioned wound rotor motor, the slipring unit is conveniently accommodated in a dedicated cabinet.

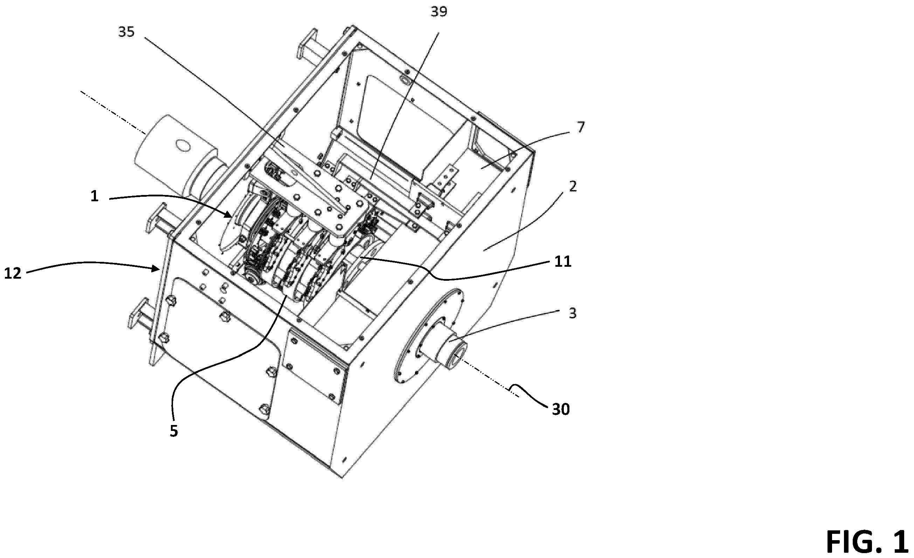

As shown in figure 1, the slipring unit 1 is thus preferably surrounded by an outer casing 2 at least locally openable for inspection purposes. Conveniently, the motor shaft 3 protrudes, at least partially, outside the outer casing 2 for mechanical connection with other parts of the wound rotor motor or other apparatuses.

Preferably, the slipring unit 1 comprises a support plate 12, which may, in turn, be mechanically coupled to the outer casing 2 or be a part of this latter.

According to the invention, the slipring unit 1 comprises a ring bushing 5 coupled to the rotatable shaft 3, so as to rotate together with this latter.

The ring bushing 5 includes one or more electrically conductive rings 6 (e.g. made for example of stainless steel), namely a conductive ring for each electric phase.

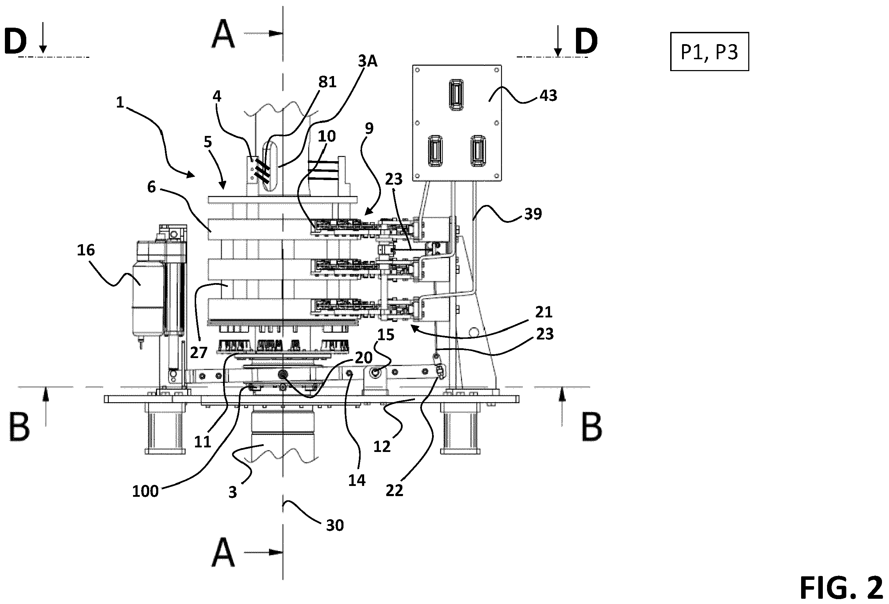

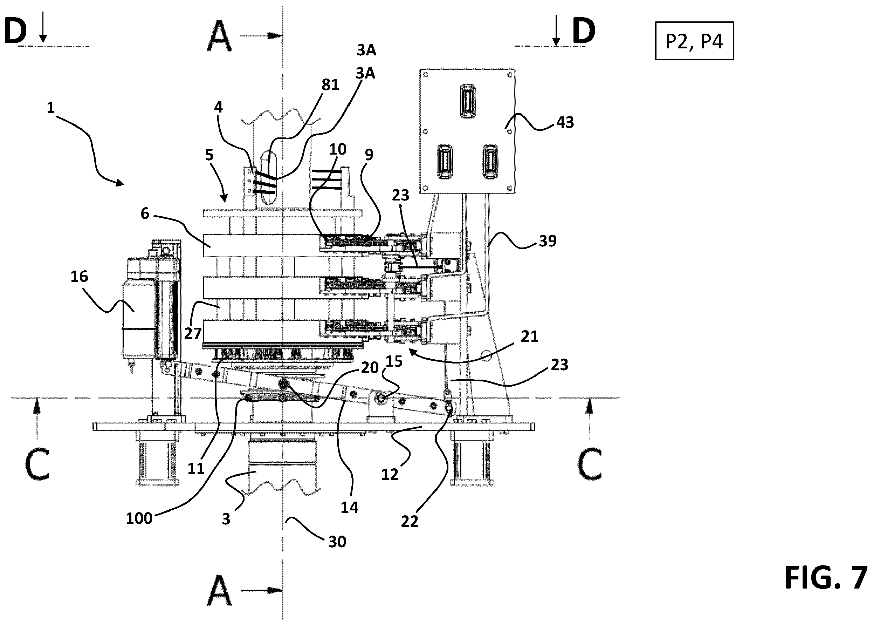

Each conductive ring 6 is electrically connected to a corresponding rotor winding of the rotor core, for example by means of suitable electrical connections 81 passing through an internal cavity of the motor shaft 3 and made accessible at a suitable slot 3A obtained on said shaft (figure 2 and 7).

The number of conductive rings 6 of the ring bushing 5 depends on the number of electric phases of the wound rotor motor. As an example, if this latter is of the 3-phase type, the ring bushing 5 comprises three conductive rings 6 spaced one from another along the shaft 3, each connected to a respective rotor winding of the rotor core.

Preferably, the ring bushing 5 comprises one or more groups of first electric contacts 25, namely a group of electric contacts for each conductive ring 6.

Preferably, the ring bushing 5 comprises one or more first connecting bars 27 (e.g. two for each electric ring 6), which are adapted to connect electrically each conductive ring 6 with a corresponding group of first electric contacts 25.

Preferably, the ring bushing 5 further comprises one or more second connecting bars 4 (e.g. one for each electric ring 6), which are adapted to connect electrically each conductive ring 6 with corresponding rotor winding through a corresponding electrical connection 81. Conveniently, the connecting bars 4, 27 mainly extend along directions parallel to the main longitudinal axis 30 of the shaft 3 and are made of an electrically conductive material (e.g. a copper alloy).

The connecting bars 4, 27 are covered by an electrically insulating material in such a way to ensure electrical insulation between the contact rings 6 related to different electric phases (when these latter are not short-circuited in certain operating conditions). In other words, the connecting bars 4, 27 are electrically connected to a corresponding contact ring 6 and group of electric contacts 25 for each electric phase. When a bar 4, 27 passes through a contact ring related to a different electric phase, the insulating material ensures a suitable electrical insulation.

In general, the conductive rings 6 of the ring bushing 5 (and the rotor windings electrically connected thereto) may be electrically connected to an external rheostat (not show) in order to modify the equivalent resistance of the rotor assembly.

The above-mentioned rheostat can be electrically connected to a rheostat connection member 43 (e.g. a connection plate including a connection plug for each electric phase), which can be housed in a suitable housing 7 formed in the outer casing 2 (figure 1).

According to the invention, the slipring unit 1 comprises one or more brush assemblies 9, namely a brush assembly for each electric phase.

Each brush assembly 9 comprises one or more electrically conductive brushes 10, which are movable between a coupled position P1, at which said conductive brushes are in contact with a corresponding conductive ring 6 of the ring bushing 5, and an uncoupled position P2, at which said conductive brushes are separated from the corresponding conductive ring 6 of the ring bushing 5.

Preferably, each brush assembly 9 comprises a plurality of brush supports 28, namely a brushes support for each ring 6.

The brush supports 28 are preferably positioned spaced one from another along the shaft 3.

Each brush support 28 comprises two half-plates 29, carrying one or more brushes 10 that are hinged to a fixed plate 57 at a plate pivot 31 so to be rotatable relative to the latter around an axis parallel to the main longitudinal axis 30 of the shaft 3.

Each half-plate 29 extends in a circumferential direction of the shaft 3 and supports the brushes 10 such that these latter are in contact with the ring 6 in a substantially radial direction of the shaft 3 when the brush assembly 9 is in the coupled position P1.

The passage to the uncoupled position P2 of the brush assembly 9 corresponds to a rotation of the half-plates 29 around the pivot 31 such that the half-plates 29 spread one relative to the other, preferably in a symmetrical manner. These movements of the half-plates 29 are driven by suitable lanyards 23 which can be connected to the half-plates 29.

First elastic means 45 (e.g. one or more traction springs) are conveniently arranged to act between the two half-plates 29 such as to contrast the above-mentioned spread movement thereof. In other words, the elastic means 45 act such that the brush assembly 9 is solicited towards the coupled position P1 and the brushes 10 are pushed on the rings 6 in order to ensure a continuous electric contact while the brushes 10 are engaged to the rings.

Preferably, each half-plate 29 comprises a brush holder 32 including at least one brush 10. The brushes 10 are slidable along the brush holder 32 in such a way to maintain a radial direction with respect to the shaft 3.

Second elastic means 40 (e.g. one or more compression springs) are arranged to push each brush 10 against the respective ring 6 according to a radial direction.

The fixed plate 57 of each brush assembly 9 is fixed to a support bracket 35 of the support plate 12. Such a support bracket extends longitudinally along the main longitudinal axis 30 of the shaft 3.

In order to insulate electrically the conductive rings 6 one form another (when they are not short-circuited), the brush assembly 9 comprises one or more electrically insulating spacers 36 that are positioned between the support bracket 35 and the fixed plate 57.

The support bracket 35 comprises suitable lanyards guiding means (not shown) for guiding the lanyards 23, such that the half-plates 29 can perform the above-mentioned rotations around the pivot 31.

Each brush assembly 9 conveniently comprises protruding portions 38, which can be for example part of the fixed plate 57, extending transversally, preferably perpendicularly, to the main longitudinal axis 30 of the shaft 3.

The protruding portions 38 are electrically connected to the brushes 10 and electrically insulated from the support bracket 35. For example, the protruding portions 38 can be positioned between the insulating spacers 36 and the fixed plate 57 and they can be manufactured in one piece with the fixed plate 57.

Conveniently, the fixed plate 57, the plate pivot 31, the half-plates 29 and the brush holders 32 are made of electrically conducting material.

Conveniently, the slipring unit 1 comprises auxiliary conductive bars 39 (one for each electric phase) for electrically connecting the protruding portions 38 to the rheostat connections plate 43.

According to the invention, the slipring unit 1 comprises a short-circuiting bushing 11 coupled to the shaft 3 so as to rotate together with this latter.

The short-circuiting bushing 11 is slidingly movable relative the shaft 3, along the main longitudinal axis 30.

In particular, the short-circuiting bushing 11 is movable between a non-short-circuiting position P3, at which it is separated from the ring bushing 5, and a short-circuiting position P4, at which it is coupled to the ring bushing 5 and it causes the short-circuiting of the conductive rings 6 and of the rotor windings.

When the short-circuiting bushing 11 is separated from the ring bushing 5, the conductive rings 6 are electrically insulated one from another. Consequently, also the rotor windings are electrically insulated one from another.

When the short-circuiting bushing 11 is coupled to the ring bushing 5, the conductive rings 6 are electrically connected one to another and, consequently, the rotor windings of the rotor core are electrically connected one to another. In this last case, the rotor assembly takes a so-called squirrel-cage configuration.

Preferably, the short-circuiting bushing 11 comprises a main body 11B, which is preferably made of a metallic material (e.g. cast iron).

The main body 11B is conveniently mounted on the shaft 3 with clearance and be rotatably coupled to the shaft 3 for example by a key (not shown in the Figures).

Preferably, the main body 11B comprises an external circumferential groove 11C for coupling by stud rollers and levers. In this manner, the short-circuiting bushing 11 can reversibly move along the shaft 3 between the non-short-circuiting position P3 and the short-circuiting position P4 and, at the same time, rotate integrally with the shaft 3.

The short-circuiting bushing 11 comprises a second contact plate 11A made of electrically conductive material and fixed to the main body 11B.

The short-circuiting bushing 11 comprises second electric contacts 24 arranged on the second contact plate 11A.

The second electric contacts 24 are separated from the first electric contact 25 of the ring bushing 5, when the short-circuiting bushing 11 is in the non-short-circuiting position P3, and they are coupled to the first electric contact 25 of the ring bushing 5, when the short-circuiting bushing 11 is in the short-circuiting position P4. In this last case, the rotor windings of the rotor core and the conductive rings 6 of the ring bushing 5 are short-circuited through the conductive second contact plate 11A.

According to the invention, the slipring unit 1 comprises a lifting device including actuating means 14, 16, 21 for moving the conductive brushes 10 of each brush assembly 9 and the short-circuiting bushing 11.

Conveniently, the actuating means 14, 16, 21 are adapted to move the conductive brushes 10 of each brush assembly 9 and the short-circuiting bushing 11 in a coordinated manner, so that:
- when the conductive brushes 10 of each brush assembly 9 are in the coupled position P1, the short-circuiting bushing 11 is in the non-short-circuiting position P3;
- when the conductive brushes 10 of each brush assembly 9 are in said uncoupled position P2, the short-circuiting bushing 11 is in the short-circuiting position P4.

Conveniently, when the slipring unit 1 is switched off, the conductive brushes 10 are in the coupled position P1 and the short-circuiting bushing 11 is in the non-short-circuiting position P3. When the slipring unit 1 starts operating and a desired speed or torque is reached, the actuating means 14, 16, 21 move the brushes 10 to the uncoupled position P2 and the short-circuiting bushing 11 is in the short-circuiting position P4.

Preferably, the above-mentioned actuating means comprises an actuating assembly 16 adapted to provide an actuation force for moving both the brushes 10 (in particular, the half-plates 29 supporting the brushes 10) and the short-circuiting bushing 11.

Conveniently, the actuating assembly 16 comprises an actuator that is fixedly coupled to the support plate 12. Such an actuator is preferably a linear actuator and comprises an actuator shaft parallel to the shaft 3, which is movable between a retracted position and an extended position.

The above-mentioned actuating means further comprise one or more main levers 14 (preferably a pair) hinged to the support plate 12 at a main pivot 15.

The main pivot 15 and the actuator 16 are in opposite positions with respect to the shaft 3. The actuating assembly is operatively coupled to the main levers 14 and drives the latter such that the main levers 14 oscillate around the main pivot 15.

The main levers 14 are movable between a first position and a second position. In particular, the shaft of the above-mentioned linear actuator is coupled to the main levers 14 in such a way that, when the actuator shaft is in the retracted position, the main levers 14 are in the first position, and when the actuator shaft is in the extended position, the main levers 14 are in the second position.

The main levers 14 are operatively coupled to the short-circuiting bushing 11, preferably by suitable stud bearings 20, in such a way that, when the main levers 14 move from the first position to the second position, the short-circuiting bushing 11 moves from the non-short-circuiting position P3 to the short-circuiting position P4 (by sliding along the shaft 3 while rotating integrally with the latter), and when the main levers 14 move from the second position to the first position, the short-circuiting bushing 11 moves from the short-circuiting position P4 to the non-short-circuiting position P3.

As mentioned above, the short-circuiting bushing 11 comprises a circumferential groove 11C suitable to be engaged by the above-mentioned stud bearings 20 such that the main levers 14 can actuate the short-circuiting bushing 11, while this latter rotates together with the shaft 3. The above-mentioned actuating means further comprise a brush lifting mechanism 21 adapted to move the brushes 10 between the coupled position P1 and the uncoupled position P3.

The brush lifting mechanism 21 comprises one or more lanyards 23, having one end coupled to the main levers 14 at a lanyard pivot 22, and an opposite end coupled to the brushes 10, in particular to the half-plates 29.

The main levers 14 and the brush lifting mechanism 21 are arranged in such a way that the lanyards 23 are pulled or released by the main levers 14 at lanyards pivot 22, when the brushes 10 have to be moved between the coupled position P1 to the uncoupled position P2.

In particular, the main levers 14 and the brush lifting mechanism 21 are arranged in such a way that, when the main levers 14 are in the first position, the brushes 10 are in the coupled position P1, and, when the main levers 14 are in the second position, the brushes 10 are in the uncoupled position P2.

In this way, the brushes 10 are moved in a synchronized manner with respect to the short-circuiting bushing 11, thereby being in the coupled and uncoupled positions P1, P2 when the short-circuiting bushing 11 is in the non-short-circuiting and short-circuiting positions P3, P4, respectively.

A peculiar aspect of the invention consists in that the slipring unit 1 comprises retaining means 100 adapted to interact with the shaft 3 and the short-circuiting bushing 11 to prevent undesired movements of the short-circuiting bushing 11, along the main longitudinal axis 30 of the shaft 3, when the short-circuiting bushing 11 is in the short-circuiting position P4 (and it is not subject to actuation forces exerted by the actuation means 14, 16 and directed to move the short-circuiting bushing 11 towards the non-short-circuiting position P3).

Preferably, the above-mentioned retaining means comprise one or more retaining elements 100 fixed to the short-circuiting bushing 11, so as to move together with the short-circuiting bushing 11. The retaining elements 100 are adapted to engage corresponding portions 33 of the shaft 3 to prevent undesired movements of the short-circuiting bushing 11, along the main longitudinal axis 30 of the shaft 3, when the short-circuiting bushing 11 is in the short-circuiting position P4.

Preferably, the retaining elements 100 are arranged along corresponding radial directions 100A with respect to the shaft 3. In particular, the retaining elements 100 are arranged circumferentially with respect to the shaft 3 on a reference plane perpendicular to the main longitudinal axis 30.

Preferably, the slipring unit 1 comprises a plurality of retaining elements 100 angularly spaced one from another. In particular, the slipring unit 1 comprises one or more pairs of retaining elements 100, each of which comprises two retaining elements 100 arranged at opposite sides of the shaft 3. In this way, it is ensured a suitable balance of the shaft 3 during its rotation about the longitudinal axis 30.

Preferably, the slipring unit 1 comprises support means 110 adapted to support the retaining elements 100 and fix these latter to the short-circuiting bushing 11, so that they move together with the short-circuiting bushing 11.

According to the embodiment shown in the cited figures, each retaining element 100 is preferably formed by a spring-loaded stopper, which is adapted to fit in a corresponding seat 33 of the rotatable shaft 3, when the short-circuiting bushing 11 is in the short-circuiting position P4.

Preferably, each spring-loaded stopper 100 comprises an outer body 104 that includes a pass-through cavity 105 extending along a radial direction 100A with respect to the shaft 3.

When a spring-loaded stopper 100 is in its normal operating position (as shown in the cited figures), the pass-through cavity 105 has a first end 105A in proximal position with respect to the shaft 3 and a second end 105B in distal position with respect to the shaft 3.

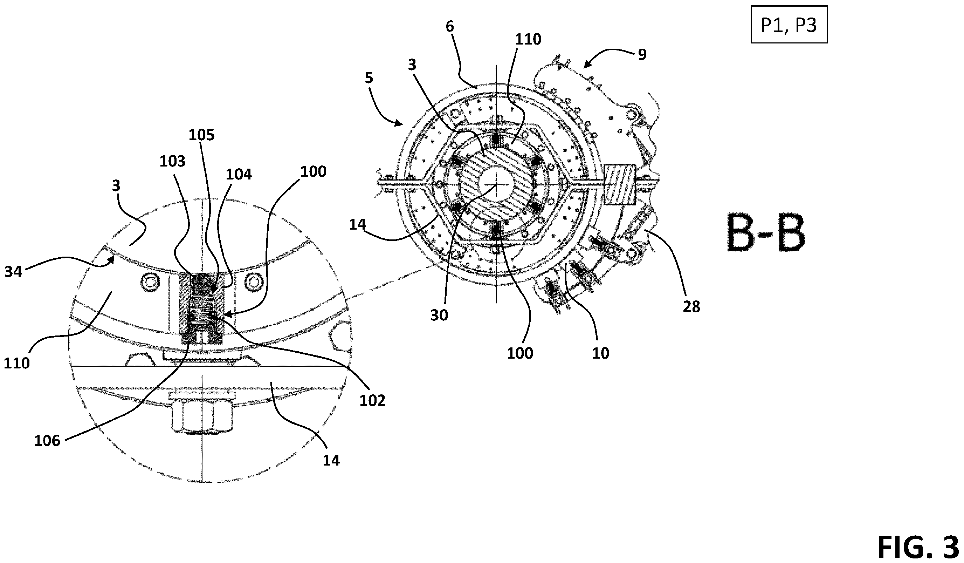

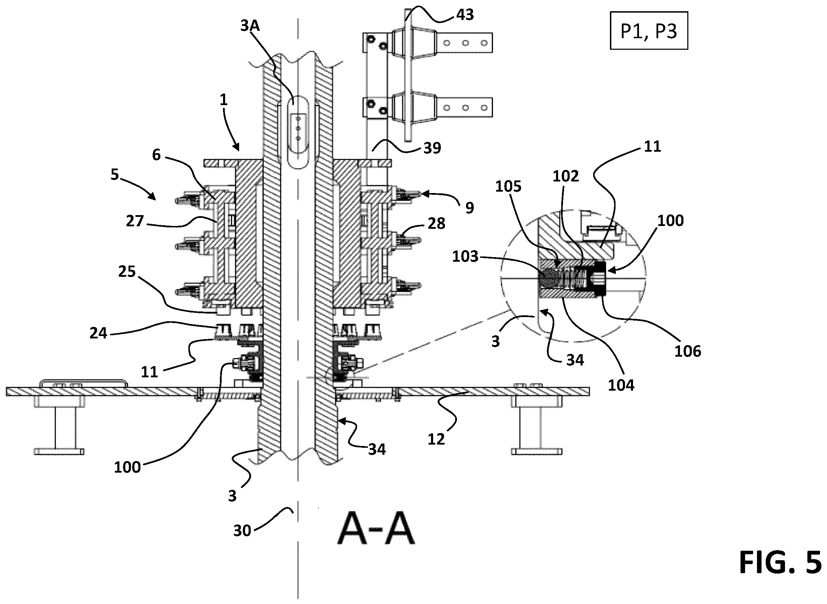

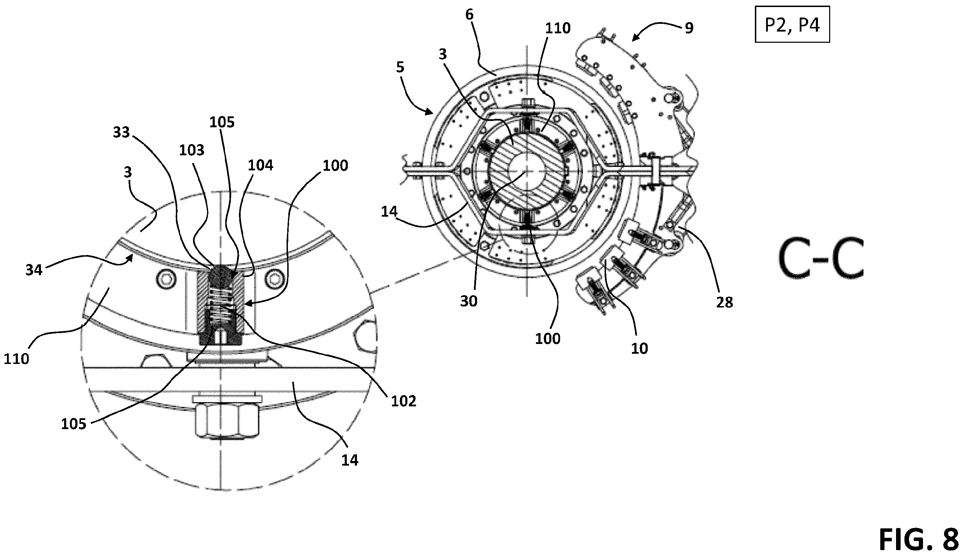

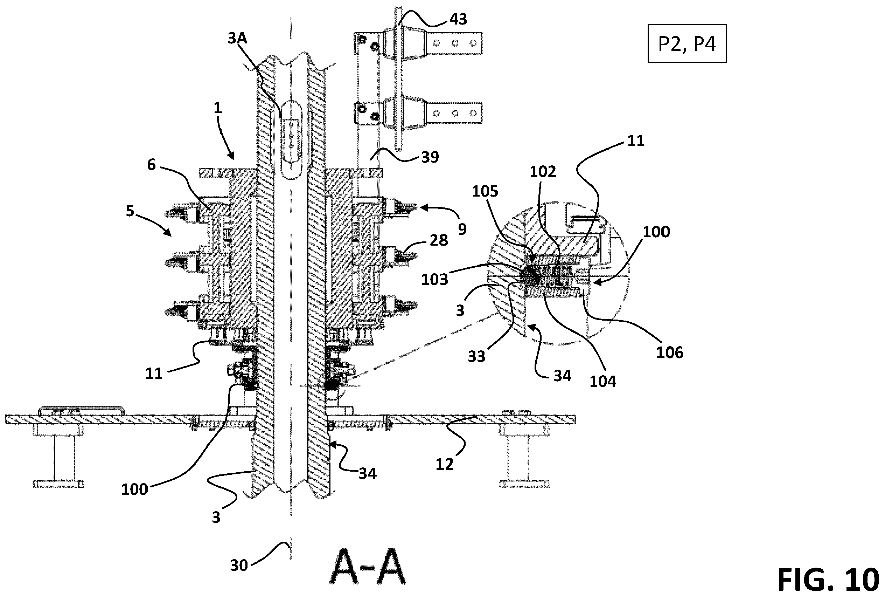

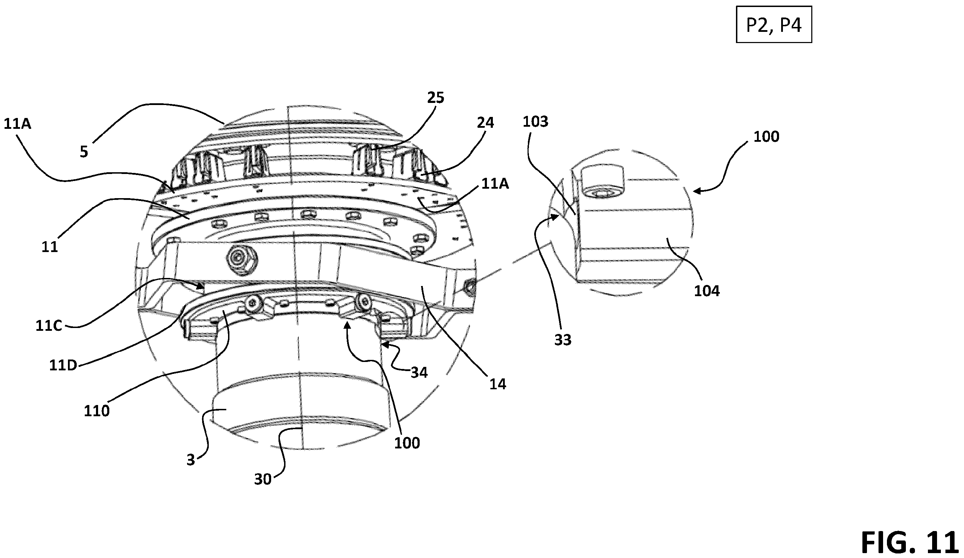

In particular, each spring-loaded stopper 100 is arranged in such a way that the first end 105A of the pass-through cavity 105 faces the outer surface 34 of the shaft 3 and it is slightly spaced (few mm) from this latter (figures 3, 5, 8, 10, 11).

Preferably, each spring-loaded stopper 100 comprises a head member 103, which is partially accommodated in the pass-through cavity 105 and protrudes from the first end 105A of the pass-through cavity 105 in such a way to be in contact with the outer surface 34 of the shaft 3. Conveniently, the walls of the outer body 104 defining the cavity 105 are suitably tapered at the first end 105A of this latter in such to allow the head element 103 to protrude from the cavity 105 and, at the same time, to be confined in the cavity 105.

The head member 103 is conveniently movable according to the radial direction 100A with respect to the shaft 3 in such a way to follow the profile of the outer surface 34 of the shaft 3 while remaining in sliding contact with said outer surface.

Preferably, the head member 103 is formed by a ball of a relatively hard material, e.g. of stainless or hardened steel. In principle, however, it may be shaped differently, e.g. according to a mushroom shape, a pin shape, or the like.

Preferably, each spring-loaded stopper 100 comprises a plug member 106 removably fixed to the outer body 104 and partially accommodated in the pass-through cavity 105. Conveniently, the plug member 106 protrudes from the second end 105B of the pass-through cavity 105. Preferably, the plug member 106 is screwed on threaded walls of the outer body 104, which define the cavity 105 at the second end 105B. In this way, it may be secured in or removed from its operating position by simply using a suitable manual tool.

Preferably, each spring-loaded stopper 100 comprises an elastic member 102 accommodated in the pass-through cavity 105 and coupled to the head member 103 and the plug member 106. Preferably, the elastic member 102 is formed by a spring (optionally pre-compressed) having opposite ends coupled to the head member 103 and the plug member 106. Conveniently, the spring 102 is characterised by a relatively high elastic constant.

Preferably, the above-mentioned support means comprise a support ring 110.

The support ring 110 is fixed to the short-circuiting bushing 11, conveniently at a distal position with respect to the second contact plate 11A (for example at an opposite edge 11D of the main body 11B).

The support ring 110 is additionally fixed to the outer body 104 of each spring-loaded stopper 100.

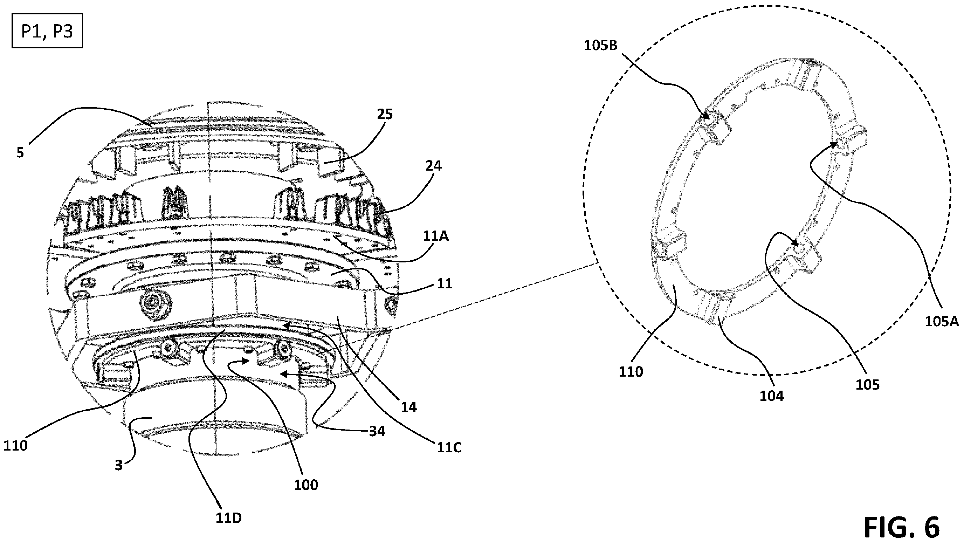

Preferably, the support ring 110 is made in one piece with the outer body 104 of each spring-loaded stopper 100 (figure 6), e.g. by means of a suitable moulding or cut-out process.

As an alternative (not shown), the outer body 104 of each spring-loaded stopper 100 may be removably fixed to the support ring 110, e.g. by means of suitable screws or rivets.

The operation of the retaining means 100, according to the embodiment shown in the cited figures, is briefly described in the following.

When the short-circuiting bushing 11 is in the non-short-circuiting position P3, the (one or more) spring-loaded stoppers do not engage the shaft 3 and do not exert any retaining force on the short-circuiting bushing 11. At this stage, the head member 103 of each spring-loaded stopper 100 simply leans against the outer surface 34 of the shaft 3 and the elastic member 102 is compressed.

When the actuating means 14, 16 move the short-circuiting bushing 11 from the non-short-circuiting position P3 towards the short-circuiting position P4, the spring-loaded stoppers 100 move together with the short-circuiting bushing 11. At this stage, the head member 103 of each spring-loaded stopper 100 slides along the outer surface 34 of the shaft 3.

As soon as the short-circuiting bushing 11 reaches the short-circuiting position P4, the spring-loaded stoppers 100 fit into corresponding seats 33 on the outer surface 34 of the rotatable shaft 3. At this stage, the head member 103 is slightly pushed out the cavity 105 by the force exerted by the elastic member 102 that is subject to a release (partial or total).

Therefore, when the short-circuiting bushing 11 reaches the short-circuiting position P4, the spring-loaded stoppers 100 engage the rotatable shaft 3 and exert a retaining force preventing undesired movements of the short-circuiting bushing 11, along the main longitudinal axis 30 of the shaft 3. Obviously, in this situation, the short-circuiting bushing 11 and the spring-loaded stoppers 100, which are fixed thereto, continue to rotate about main longitudinal axis 30 together with the shaft 3.

When the actuating means 14, 16 move the short-circuiting bushing 11 from the short-circuiting position P4 towards the non-short-circuiting position P3, the spring-loaded stoppers 100 are removed from the corresponding seats 33 as the actuation force exerted by the actuation means 14, 16 is quite higher than the retaining force exerted by the spring-loaded stoppers 100. At this stage, the head member 103 of each spring-loaded stopper 100 is slightly pushed back and the elastic member 102 is subject to a compression.

When the actuating means 14, 16 move the short-circuiting bushing 11 from the short-circuiting position P4 towards the non-short-circuiting position P3, the spring-loaded stoppers 100 move together with the short-circuiting bushing 11. At this stage, the head member 103 of each spring-loaded stopper 100 leans against the outer surface 34 of the shaft 3 and it slides along it while the elastic member 102 remains compressed.

It has been found that the slipring unit 1, according to the invention, fully achieves the intended aim and objects.

The slipring unit 1 is characterised by high levels of reliability in operation. The retaining means 100, in fact, ensure an optimal and stable mechanical coupling and electrical connection between the electric contacts of the short-circuiting bushing 11 and the ring bushing 5, when the short-circuiting bushing 11 is in the short-circuiting position P4.

The retaining means 100 are characterised by a high level of modularity and flexibility in use. The number of spring-loaded stoppers may be varied according to the need. Additionally, the mechanical characteristic of each spring-loaded stopper may be designed in accordance to the installation needs.

The retaining means 100 can be easily integrated in the slipring unit, in particular with the short-circuiting bushing 11, without having a noticeable impact of the overall size. Despite of the presence of the retaining means 100, the slipring unit 1 is thus characterised by a relatively simple and compact structure.

The slipring unit 1 has proven to be relatively easy and inexpensive to manufacture at industrial levels.

## Claims

1. A slipring unit (1) for a wound rotor unit, wherein said slipring unit (1) comprises:
- a ring bushing (5) coupled to a rotatable shaft (3) of said wound rotor motor, so as to rotate together with said rotatable shaft, and including one or more electrically conductive rings (6), each electrically connected to a corresponding rotor winding of said wound rotor motor;
- one or more brush assemblies (9), each including one or more electrically conductive brushes (10), the conductive brushes of each bush assembly being movable between a coupled position (P1), at which said conductive brushes (10) are in contact with a corresponding conductive ring (6), and an uncoupled position (P2), at which said conductive brushes (10) are separated from said corresponding conductive ring (6);
- a short-circuiting bushing (11) coupled to said rotatable shaft so as to rotate together with said rotatable shaft, said short-circuiting bushing being slidingly movable relative to said rotatable shaft (3), along a main longitudinal axis (30) of said rotatable shaft, between a non-short-circuiting position (P3), at which said short-circuiting bushing is separated from said ring bushing (5), and a short-circuiting position (P4), at which said short-circuiting bushing (11) is coupled with said ring bushing (5), thereby causing the short-circuiting of said conductive rings (6) and said rotor windings;
- a lifting device including actuating means (14, 16, 21) for moving the conductive brushes (10) of each brush assembly (9) and said short-circuiting bushing (11);
**characterised in that** said slipring unit (1) comprises retaining means (100) adapted to interact with said rotatable shaft (3) and with said short-circuiting bushing (11) to prevent undesired movements of said short-circuiting bushing, along a main longitudinal axis (30) of said rotatable shaft, when said short-circuiting bushing is in said short-circuiting position (P4).

2. Slipring unit, according to claim 1, **characterised in that** said retaining means comprise one or more retaining elements (100) fixed to said short-circuiting bushing (11) so as to move together with said short-circuiting bushing, said retaining elements being adapted to engage corresponding portions (33) of said rotatable shaft (3), when said short-circuiting bushing is in said short-circuiting position (P4).

3. Slipring unit, according to claim 2, **characterised in that** said retaining elements (100) are arranged along corresponding radial directions (100A) with respect to said rotatable shaft (3).

4. Slipring unit, according to claim 3, **characterised in that** said retaining means comprise a plurality of retaining elements (100) arranged circumferentially around said rotatable shaft (3) and angularly spaced one from another.

5. Slipring unit, according to anyone of the claims from 2 to 4, **characterised in that** each retaining element (100) is formed by a spring-loaded stopper adapted to fit in a corresponding seat (33) of said rotatable shaft (3), when said short-circuiting bushing is in said short-circuiting position (P4).

6. Slipring unit, according to claim 5, **characterised in that** said spring-loaded stopper (100) comprises:
- an outer body (104) including a pass-through cavity (105) extending along a radial direction (100A) with respect to said rotatable shaft (3) and having a first end (105A) in proximal position with respect to said rotatable shaft and a second end (105B) in distal position with respect to said rotatable shaft;
- a head member (103) partially accommodated in said pass-through cavity (105) and protruding from the first end (105A) of said pass-through cavity in such a way to be in contact with the outer surface (34) of said rotatable shaft, said head member being movable according to a radial direction (100A) with respect to said rotatable shaft (3);
- a plug member (106) removably fixed to outer body (104) and partially accommodated in said pass-through cavity (105), said plug member protruding from the second end (105B) of said pass-through cavity;
- an elastic member (102) accommodated in said pass-through cavity (105) and coupled to said head member (103) and said plug member (106).

7. Slipring unit, according to anyone of the claims from 2 to 6, **characterised in that** it comprises support means (110) adapted to support said one or more retaining elements (100) and fix said retaining elements to said short-circuiting bushing (11).

8. Slipring unit, according to claims 6 and 7, **characterised in that** said support means comprise a support ring (110) fixed to said short-circuiting bushing (11) and to the outer body (104) of each spring-loaded stopper (100).

9. Slipring unit, according to anyone of the previous claims, **characterised in that** said actuating means (16, 14, 21) are adapted to move the conductive brushes (10) of each brush assembly (9) and said short-circuiting bushing (11), so that:
- when the conductive brushes (10) of each brush assembly (9) are in said coupled position (P1), said short-circuiting bushing (11) is in said non-short-circuiting position (P3);
- when the conductive brushes (10) of each brush assembly (9) are in said uncoupled position (P2), said short-circuiting bushing (11) is in said short-circuiting position (P4).

10. A wound rotor motor comprising a stator assembly, a rotatable shaft (3) and a rotor assembly coupled to said rotatable shaft, so as to rotate together with said rotatable shaft, and comprising a rotor core having one or more rotor windings **characterized in that** it comprises a slipring unit, according to one or more of the previous claims.
